# FASCICULE DE BREVET EUROPEEN

(11) **EP 2 572 919 B1**
(45) Date de publication et mention de la délivrance du brevet: **24.06.2015**
(21) Numéro de dépôt: 12004752.7
(22) Date de dépôt: 25.06.2012
(51) Int. Cl.: B60K 15/035, B64C 27/04, B64D 37/02

(54) **Système de stockage de carburant, et véhicule**
System zur Kraftstoffspeicherung, und Fahrzeug
Fuel storage system and vehicle

(30) Priorité: 26.09.2011 FR 1102907
(43) Date de publication de la demande: 27.03.2013
(73) Titulaire: Airbus Helicopters, 13725 Marignane Cedex (FR)
(72) Inventeur: Mougin, Stéphane, 13790 Rousset (FR); Passemard, Cyril, 13300 Salon de Provence (FR)
(74) Mandataire: Pouillot, Laurent Pierre Paul

(56) Documents cités:
- DE-A1- 3 719 834
- DE-A1- 4 121 321
- US-A1- 2002 121 300
- US-A1- 2005 199 294

## Description

La présente invention concerne un système de stockage de carburant, ainsi qu'un véhicule équipé de ce système de stockage de carburant. Plus particulièrement mais non exclusivement, l'invention se rapporte à un aéronef et notamment un aéronef comprenant une voilure tournante, un aéronef à voilure tournante présentant des caractéristiques spécifiques induisant des différences notables avec un avion ou une automobile.

Un système de stockage de carburant comporte usuellement au moins un réservoir contenant le carburant. De plus, le système de stockage inclut usuellement un volume d'expansion.

Un tel volume d'expansion a pour fonction d'accueillir une partie du carburant stocké dans les réservoirs en cas de dilatation de ce carburant. Le volume d'expansion évite alors la création de tensions importantes dans les parois des réservoirs.

Les règlements de certification des aéronefs peuvent imposer un volume minimal à ce volume d'expansion. Par exemple, le paragraphe 969 du règlement de certification connu sous la dénomination « CS 29 » précise que le volume d'expansion doit être supérieur ou égal à deux pourcents du volume total des réservoirs.

De plus, ce paragraphe spécifie que le volume d'expansion ne doit pas pouvoir être rempli par inadvertance lorsque l'aéronef se trouve dans une position normale au sol.

Il est à noter que l'on entend par « position normale » ou « condition normale » les positions autorisées du véhicule par le constructeur lors d'un remplissage. Ces positions autorisées peuvent être définies par exemple au travers d'un angle de roulis et d'un angle de tangage seuils.

Il est donc strictement interdit de remplir au moins partiellement le volume d'expansion lors du remplissage des réservoirs, afin que ce volume d'expansion soit entièrement disponible en cas de dilatation du carburant en vol.

Par ailleurs, un système de stockage en carburant inclut généralement un circuit de mise à l'air libre permettant d'évacuer dans l'atmosphère une partie des gaz contenus dans le système de stockage.

Pour ménager un volume d'expansion, selon une première solution il est possible d'utiliser la partie supérieure d'un réservoir en tant que volume d'expansion, ce volume d'expansion communiquant avec l'atmosphère par un circuit de mise à l'air libre.

Toutefois, on comprend que l'orifice de remplissage doit être positionné avec soin afin que la partie supérieure du réservoir ne soit pas remplie lors du remplissage du réservoir. Cette partie supérieure doit alors se trouver à l'aplomb d'un plan de remplissage passant par l'orifice de remplissage.

Cette première solution présente l'avantage d'être simple. Par contre, la contrainte liée au positionnement de l'orifice de remplissage peut rendre son intégration compliquée sur certains aéronefs, notamment des aéronefs présentant des réservoirs agencés au sein d'une « barque » disposée sous un plancher cabine.

Selon une deuxième solution, on met en oeuvre un vase d'expansion définissant le volume d'expansion requis.

Ce vase d'expansion est distinct du réservoir avec lequel il est en communication. Dès lors, le vase d'expansion peut être déporté par rapport à ce réservoir, par exemple dans une partie haute d'un circuit de mise à l'air libre.

On comprend qu'il est alors plus aisé de positionner l'espace d'expansion dans un plan situé à l'aplomb d'un orifice de remplissage. Toutefois, il peut être délicat de libérer au sein de l'aéronef un espace susceptible d'accueillir le vase d'expansion.

De plus, cette deuxième solution induit parfois l'agencement de moyens de sécurité annexes pour prévenir un risque d'incendie en cas de crash, maximisé éventuellement par la présence de carburant dilaté dans un vase d'expansion déporté.

Enfin, on comprend que cette deuxième solution induit une architecture relativement compliquée, pouvant induire des difficultés de maintenance.

Dans le domaine automobile, on connaît des réservoirs de carburant obturés hermétiquement par un bouchon de remplissage fermant hermétiquement et munis d'un dispositif annexe de mise à la pression atmosphérique du contenu du réservoir.

Ce dispositif annexe est obtenu au moyen d'une canalisation partant de la partie supérieure du réservoir et se dirigeant vers un récipient contenant du charbon actif.

Ce récipient contient du charbon actif pour dépolluer les gaz s'échappant du réservoir de carburant avant leur rejet dans l'atmosphère

De plus, le système comprend un vase d'expansion agencé entre le réservoir de carburant et ledit récipient.

Afin d'éviter que du carburant ne pénètre dans le vase d'expansion pendant le remplissage, l'automobile est munie généralement de dispositifs obturant le circuit de mise à l'air libre lorsque le bouchon de remplissage et/ou la trappe de remplissage prévue dans la carrosserie du véhicule sont ouverts.

Il est à noter que les aéronefs à voilure tournante et notamment les hélicoptères ne sont classiquement pas équipés d'un récipient de filtrage des gaz, le réservoir de carburant étant directement relié à l'air par des tuyauteries, voire par au moins un clapet anti-reversement de mise à l'air libre ayant pour fonction d'éviter de vider le réservoir de carburant au travers du circuit de mise à l'air libre en cas de retournement de l'aéronef.

Le carburant n'a donc pas besoin d'être soumis à une pression particulière sur un tel véhicule. Pour cette raison, afin d'obtenir un volume d'expansion interne au réservoir, l'homme du métier applique parfois la première solution précitée.

Sur un véhicule de type avion, les réservoirs de carburant sont généralement agencés dans les ailes. La problématique architecturale liée à un avion est donc complètement différente de la problématique associée à un aéronef à voilure tournante de type hélicoptère par exemple.

Sur un avion de tourisme, le ravitaillement en carburant se fait généralement par une trappe agencée sur la paroi supérieure du réservoir de carburant. L'aile présentant usuellement une inclinaison, une partie des réservoirs demeure vide après le ravitaillement et représente ainsi le volume d'expansion requis.

Sur certains avions, plusieurs réservoirs sont montés à l'intérieur des ailes, ces réservoirs communiquant au moyen d'une ligne de ventilation avec une chambre de ventilation.

En cas de dilatation du carburant en vol, ce carburant peut se déverser dans la chambre de ventilation. Il est à noter que des pompes de transfert assurent le retour du carburant de la chambre de ventilation vers les réservoirs.

Le document US 7621483 présente une architecture de ce type.

A l'instar du domaine automobile, les réservoirs sont sous pression. De plus, le système de stockage de carburant présente une complexité et un dimensionnement ne paraissant pas compatibles avec les exigences des aéronefs à voilure tournante de type hélicoptère notamment.

Parmi l'arrière plan technologique, on connaît le document DE19925728 qui présente un vase d'expansion agencé en série sur un circuit de mise à l'air libre, le vase d'expansion étant en outre disposé à l'intérieur d'un réservoir.

Dès lors, le volume d'expansion délimité par le vase d'expansion communique alors d'une part avec l'intérieur du réservoir par le biais d'un ensemble comprenant au moins une première valve, et d'autre part avec l'extérieur par une deuxième valve et un système de traitement au charbon actif.

En fonction de la différence de pression entre le volume d'expansion et l'intérieur du réservoir, le carburant peut se déplacer du réservoir vers le vase d'expansion et inversement

Par ailleurs, le document EP0233681 présente un système de stockage de carburant comprenant un réservoir et un vase d'expansion agencé dans ce réservoir.

Le document US 2005/199294 présente un réservoir relié à une tubulure de remplissage débouchant sur un orifice de remplissage. De plus, une ligne de mise à l'air libre relie le réservoir à l'air libre.

Dès lors, un vase d'expansion est agencé en dehors du réservoir, ce vase d'expansion étant relié par une durite haute et une durite basse à ladite ligne de mise à l'air libre.

L'orifice de remplissage est en outre présent dans un plan à l'aplomb desdites durites.

Le document US 2002/121300 présente un réservoir relié à une tubulure de remplissage débouchant sur un orifice de remplissage.

De plus, un vase d'expansion est agencé dans le réservoir. Une canalisation s'étend alors dudit vase d'expansion vers un système de traitement de vapeur.

L'orifice de remplissage est alors présent dans un plan à l'aplomb de cette canalisation.

Le document DE 37 19 834 présente un réservoir.

De plus, un vase d'expansion est agencé dans le réservoir. Une canalisation s'étend alors dudit vase d'expansion vers l'extérieur.

On connaît aussi le document DE 41 21 321.

Le vase d'expansion comporte une paroi réalisée à partir d'une mousse comportant des cellules ouvertes, le vase d'expansion se remplissant de carburant moins vite que le réservoir.

Bien qu'intéressante, ce système de stockage ne parait pas compatible avec les règlements de certification spécifiant que le volume d'expansion ne doit pas pouvoir être rempli par inadvertance lorsque l'aéronef se trouve dans une position normale au sol.

La présente invention a alors pour objet de proposer un système de stockage de carburant relativement simple pour pourvoir être agencé sur un véhicule, et plus particulièrement sur un aéronef à voilure tournante tel qu'un hélicoptère.

Selon l'invention, un système de stockage de carburant d'un véhicule est muni d'au moins un réservoir relié à une tubulure de remplissage débouchant sur un orifice de remplissage, le système comprenant un vase d'expansion et au moins une canalisation de mise à l'air libre reliant le réservoir à un milieu extérieur au véhicule.

Ce système est notamment remarquable en ce que le vase d'expansion est agencé à l'intérieur du réservoir, ce vase d'expansion étant agencé en parallèle de ladite canalisation pour ne pas participer à la mise à l'air en étant relié à ladite canalisation par une unique durite, cette durite débouchant sur ladite canalisation à l'aplomb d'un plan de remplissage passant par l'orifice de remplissage, ce vase d'expansion comprenant un moyen de vidange du carburant par gravité pour uniquement autoriser le passage par gravité du carburant du vase d'expansion vers l'intérieur du réservoir.

Il est à noter que l'expression « à l'aplomb de » s'entend véhicule au sol dans des conditions normales de remplissage.

Par conséquent, ce système propose d'agencer le vase d'expansion dans un réservoir. Il en résulte que le système peut être facilement agencé au sein d'un véhicule, et notamment un aéronef à voilure tournante.

Cet agencement permet de ne pas engendrer une modification importante de la localisation du centre de gravité de l'aéronef lorsque le vase d'expansion est rempli.

De plus, ce système est particulièrement simple dans la mesure où il ne nécessite qu'un vase d'expansion muni d'un moyen de vidange par gravité et coopérant avec une durite débouchant sur une canalisation de mise à l'air libre.

Par suite, le système peut être dépourvu de pompe pour transférer du carburant du vase d'expansion vers le réservoir.

De même, le vase d'expansion n'est pas agencé en série sur un dispositif de mise à l'air libre, mais débouche simplement sur ce dispositif de mise à l'air libre.

Dès lors, le vase d'expansion peut être dépourvu de moyens de liaison avec le réservoir autre que le moyen de vidange, pour notamment ne pas participer à la mise à l'air libre dudit réservoir.

Il est à noter qu'un blocage accidentel du moyen de vidange n'a pas d'impact sur le vol de l'aéronef.

En outre, le système de stockage ne nécessite pas l'emploi d'un moyen de mise sous pression d'un volume de fluide.

On comprend que ce système de stockage est alors particulièrement simple. Dès lors, il est possible de minimiser son coût de production ainsi que sa masse, et de réduire ses coûts d'installation au sein du véhicule.

En outre, ce système permet de répondre aux exigences de règlements de certification en générant un volume d'expansion ne pouvant pas être rempli lors du remplissage.

En effet, lors d'une phase de remplissage, un opérateur remplit le réservoir au travers de l'orifice de remplissage. Le carburant remplit alors le réservoir, la tubulure de remplissage et la canalisation de mise à l'air libre jusqu'à un niveau atteignant un plan dénommé « plan de remplissage » passant par l'orifice de remplissage et perpendiculaire à la pesanteur.

Or, la durite reliant le vase d'expansion à la canalisation de mise à l'air libre débouche dans cette canalisation dans un plan dénommé « plan d'expansion » par commodité et perpendiculaire à la pesanteur. Le plan d'expansion est situé à l'aplomb du plan de remplissage. Par suite, le vase d'expansion ne peut pas être rempli lors du remplissage du réservoir par gravité, du moins dans des conditions normales d'utilisation.

Si le carburant se dilate, le niveau de carburant dans la canalisation augmente au fur et à mesure que le carburant se dilate. On note que la pression du carburant dans le réservoir est induite par la pression créée par la colonne de carburant présente dans la canalisation de mise à l'air libre. Dès lors, la pression du fluide dans le réservoir demeure relativement faible. Les risques de déformation du réservoir causée par la dilatation du carburant sont donc minimes. Eventuellement, un renfort minime du réservoir voire du caisson contenant le réservoir peut être réalisé pour minimiser les risques de déformation indue.

Lorsque le niveau de carburant atteint le plan d'expansion, le carburant se déverse alors dans le vase d'expansion. Le réservoir étant plein dans la mesure où la canalisation de mise à l'air libre et le plan d'expansion sont à l'aplomb du réservoir, le carburant contenu dans le vase d'expansion ne peut pas se déverser dans le réservoir.

Lorsque le niveau de carburant dans le réservoir baisse et passe en dessous d'un plan dénommé « plan de vidange » par commodité passant par le moyen de vidange et étant perpendiculaire à la pesanteur, ce moyen de vidange s'ouvre. Le carburant contenu dans le vase d'expansion est alors évacué par gravité dans le réservoir.

Il est à noter que le moyen de vidange peut s'ouvrir par gravité sous la pression du carburant.

Par ailleurs, la maintenance du système est relativement simple dans la mesure où le système comprend un unique organe à surveiller périodiquement, à savoir le moyen de vidange.

Ce système peut par ailleurs comporter une ou plusieurs des caractéristiques qui suivent.

Par exemple, le moyen de vidange comporte un obturateur en vis-à-vis d'un orifice de vidange du vase d'expansion, l'obturateur ayant pour fonction d'obturer l'orifice de vidange lorsqu'il est en contact avec du carburant contenu dans le réservoir.

Il est à noter que l'on entend par « carburant contenu dans le réservoir », du carburant contenu dans un volume intérieur du réservoir distinct du volume occupé par le vase d'expansion.

Le moyen de vidange peut comporter un obturateur de type bille ou encore lame flexible par exemple.

Le moyen de vidange est alors particulièrement simple contrairement à certaines valves de l'état de la technique.

Selon un autre aspect, le vase d'expansion peut comporter au moins une cloison inclinée dirigée vers le moyen de vidange pour que ce moyen de vidange soit au point bas du vase d'expansion afin d'évacuer la totalité du carburant présent dans le vase d'expansion.

Par ailleurs, le réservoir s'étendant en élévation d'une paroi inférieure vers une paroi supérieure à l'aplomb de laquelle ladite durite débouche dans ladite canalisation, le vase d'expansion peut être solidarisé à la paroi supérieure.

On note que la canalisation de mise à l'air libre peut déboucher sur cette paroi supérieure.

De plus, l'agencement en position haute du vase d'expansion dans le réservoir permet notamment de maximiser le volume de carburant contenu dans le réservoir sous le plan de vidange.

En outre, la durite est éventuellement à l'extérieur dudit réservoir pour optimiser l'architecture.

L'invention vise aussi un véhicule qui comporte un système de stockage du type décrit précédemment.

Favorablement, ce véhicule peut comporter une voilure tournante. Le véhicule est alors un aéronef à voilure tournante, par exemple de type hélicoptère, sujet à une problématique spécifique au regard des problématiques liées aux automobiles et aux avions.

L'invention et ses avantages apparaîtront avec plus de détails dans le cadre de la description qui suit avec des exemples de réalisation donnés à titre illustratif en référence aux figures annexées qui représentent :
- la figure 1, un schéma illustrant un véhicule selon l'invention, et
- la figure 2, une vue isométrique d'un système de stockage.

Les éléments présents dans plusieurs figures distinctes sont affectés d'une seule et même référence.

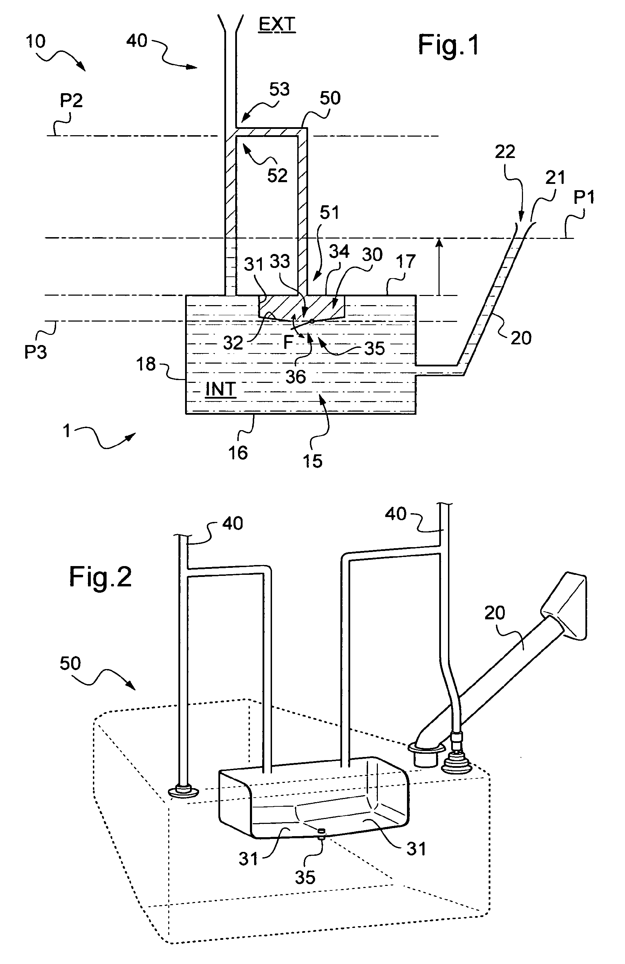

La figure 1 présente un véhicule 1 muni d'un système de stockage 10 de carburant.

Ce véhicule peut être un aéronef à voilure tournante. Toutefois, cette figure 1 fait uniquement apparaître le système de stockage 10 pour ne pas être alourdie inutilement.

Le système de stockage 10 inclut au moins un réservoir 15 de carburant. Le réservoir 15 présenté s'étend en élévation d'une paroi inférieure 16 vers une paroi supérieure 17, la paroi inférieure 16 étant reliée à la paroi supérieure 17 par une paroi latérale 18.

De plus, le système de stockage 10 inclut une tubulure de remplissage 20 débouchant sur un orifice de remplissage 21, tel qu'un orifice de remplissage d'une embase de remplissage par gravité 22 par exemple.

L'orifice de remplissage 21 est disposé dans un plan de remplissage P1, ce plan de remplissage P1 étant sensiblement perpendiculaire à la pesanteur lorsque le véhicule repose sur le sol dans une attitude normale à savoir hors accident notamment.

Par ailleurs, l'intérieur INT du réservoir 15 communique avec un milieu EXT extérieur au véhicule 1 par un circuit de mise à l'air comportant au moins une canalisation 40 de mise à l'air libre.

Cette canalisation 40 peut comprendre un ou plusieurs tuyaux, voire au moins un clapet anti-reversement. En outre, la canalisation 40 de mise à l'air libre peut déboucher sur la paroi supérieure 17 du réservoir 15.

Ce système 10 de stockage de carburant comprend de plus un vase d'expansion 30 délimitant un volume d'expansion.

Le vase d'expansion 30 est agencé dans le réservoir 15 ce qui facilite de fait son intégration dans le véhicule dans la mesure où il n'occupe pas un espace dédié.

On note que dans ces conditions on entend par «intérieur du réservoir », l'espace délimité par les parois 16, 17, 18 du réservoir qui n'est pas occupé par le vase d'expansion.

Pour communiquer avec le réservoir 15, le vase d'expansion est équipé d'une durite 50. Une première extrémité 51 de la durite 50 est alors fixée au vase d'expansion 30 et une deuxième extrémité 52 de la durite 50 débouche sur la canalisation 40. La durite 50 est favorablement à l'extérieur du réservoir 15.

Plus précisément, cette deuxième extrémité 52 de la durite 50 débouche sur la canalisation 40 dans un plan d'expansion P2. Ce plan d'expansion P2 est parallèle au plan de remplissage P1 lorsque le véhicule repose sur le sol dans des conditions normales.

De plus, le plan d'expansion P2 est à l'aplomb du plan de remplissage P1. Ainsi, on considère que la liaison d'expansion 53 entre la canalisation 40 et la durite 50 est à l'aplomb de l'orifice de remplissage 21 dans la mesure où le plan d'expansion P2 est à l'aplomb du plan de remplissage P1.

Par ailleurs, le vase d'expansion est pourvu d'un moyen de vidange 35. Le moyen de vidange 35 est agencé dans un plan de vidange P3 parallèle au plan de remplissage P1 lorsque le véhicule repose sur le sol dans des conditions normales, ce plan de remplissage P1 étant à l'aplomb du plan de vidange P3.

Ce moyen de vidange 35 a pour fonction d'évacuer par gravité du carburant dilaté contenu le cas échéant dans le vase d'expansion vers l'intérieur INT du réservoir 15.

A l'inverse, le moyen de vidange 35 interdit le passage de carburant du réservoir 15 directement vers le vase d'expansion, le carburant pouvant être acheminé de ce réservoir 15 vers le vase d'expansion seulement au travers de la canalisation 40 puis de la durite 50.

Par suite, le vase d'expansion 30 peut comprendre au moins une cloison inclinée 32 dirigée vers le moyen de vidange 35. Ainsi, le moyen de vidange 35 représente le point bas du vase d'expansion 30, à savoir l'élément de ce vase d'expansion le plus proche de la paroi inférieure 16 par exemple. Le carburant contenu dans le vase d'expansion est ainsi dirigé par l'ensemble des cloisons inclinées vers le moyen de vidange 35.

Ce moyen de vidange 35 est favorablement un organe fonctionnant automatiquement et mécaniquement.

Par exemple, le moyen de vidange 35 peut comporter un obturateur 36 coopérant avec un orifice de vidange 33 du vase d'expansion 30, chaque cloison inclinée présentant une inclinaison vers cet orifice de vidange 33.

Cet obturateur permet alors d'une part d'obturer l'orifice de vidange lorsque le niveau de carburant contenu à l'intérieur du réservoir 15 atteint le plan de vidange P3, et d'autre part de libérer au moins partiellement l'orifice de vidange sous la pression du carburant dilaté présent dans le vase d'expansion lorsque le niveau de carburant contenu à l'intérieur du réservoir 15 est situé sous le plan de vidange P3.

De plus, l'obturateur peut aussi interdire le passage d'un flux d'air directement du réservoir vers le vase d'expansion au travers de l'orifice de vidange 33, le vase d'expansion n'étant pas un élément actif du circuit de mise à l'air libre.

Selon la réalisation présentée, l'obturateur peut être une lame apte à se déplacer selon la double flèche F. D'autres types d'obturateur sont possibles, tels que des obturateurs mettant en oeuvre des billes par exemple.

Il est à noter que, pour favoriser un écoulement par gravité du vase d'expansion 30 vers l'intérieur INT du réservoir 15, le vase d'expansion peut être solidarisé à la paroi supérieure 17 du réservoir 15, et éventuellement à une paroi latérale.

Pour simplifier le système 10 de stockage, on comprend que le vase d'expansion peut être intégré au réservoir 15. Par exemple, la cloison supérieure 34 du vase d'expansion 30 opposée aux cloisons inclinées 32 peut être une partie de la paroi supérieure 17 du réservoir 15.

On comprend que le système 10 de stockage est alors particulièrement simple, ce système 10 étant notamment dépourvu de pompe de transfert entre le vase d'expansion 30 et le réservoir 15,

De même, le vase d'expansion n'est pas un élément constitutif du circuit de mise l'air libre. Ainsi, ce système 10 est dépourvu de tuyauteries de mise à l'air allant directement du vase d'expansion 30 au réservoir 15.

Par suite, pour remplir le réservoir de carburant, un opérateur dispose un moyen de remplissage tel qu'un pistolet de remplissage dans l'orifice de remplissage 21.

Le carburant s'écoule alors dans la tubulure de remplissage 20 puis remplit l'intérieur du réservoir 15. Lorsque le niveau de carburant atteint le plan de vidange P3, le moyen de vidange empêche le carburant de traverser l'orifice de vidange 33.

Lorsque le réservoir 15 est rempli, le carburant pénètre dans la canalisation 40. Le remplissage par gravité du réservoir 15 prend alors fin lorsque le niveau de carburant atteint le plan de remplissage P1 conformément à la figure 1.

Le système 10 de stockage répond alors aux exigences de certification applicables dans le domaine aéronautique en évitant le remplissage du vase d'expansion 30 lors de la phase de remplissage du réservoir 15.

Si le carburant se dilate, le volume de carburant présent dans le système 10 augmente.

Le niveau de carburant dans la canalisation 40 augmente conformément à la représentation réalisée à l'aide de hachures.

A partir du plan d'expansion P2, le carburant s'écoule dans la durite 50 et rejoint le vase d'expansion 30.

Le niveau de carburant dans le réservoir 15 dépassant le plan de vidange, le carburant dilaté demeure dans le vase d'expansion.

Par contre, dès que le niveau de carburant dans le réservoir 15 passe sous le plan de vidange P3, le vase d'expansion se vide par gravité dans le réservoir 15.

Par ailleurs, en référence à la figure 2, le réservoir peut comporter au moins deux canalisations 40. Dès lors, il est possible de prévoir deux durites, à savoir une durite par canalisation 40.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention, tel que défini dans les revendications.

## Revendications

1. Système (10) de stockage de carburant d'un véhicule (1) muni d'au moins un réservoir (15) relié à une tubulure de remplissage (20) débouchant sur un orifice de remplissage (21), ledit système (10) comprenant un vase d'expansion (30) et au moins une canalisation (40) de mise à l'air libre reliant ledit réservoir (15) à un milieu (EXT) extérieur audit véhicule (1), **caractérisé en ce que** ledit vase d'expansion (30) est agencé à l'intérieur du réservoir (15), le vase d'expansion (30) étant agencé en parallèle de ladite canalisation en étant relié à ladite canalisation (40) par une unique durite (50), cette durite (50) débouchant sur ladite canalisation (40) à l'aplomb d'un plan de remplissage passant par ledit orifice de remplissage (21), ce vase d'expansion (30) comprenant un moyen de vidange (35) du carburant par gravité pour uniquement autoriser le passage par gravité d'un carburant du vase d'expansion (30) vers l'intérieur (INT) du réservoir (15).

2. Système selon la revendication 1,
**caractérisé en ce que** ledit moyen de vidange (35) comporte un obturateur (36) en vis-à-vis d'un orifice de vidange (33) dudit vase d'expansion (30), ledit obturateur (36) ayant pour fonction d'obturer ledit orifice de vidange (33) lorsqu'il est en contact avec du carburant contenu dans le réservoir (15).

3. Système selon l'une quelconque des revendications 1 à 2,
**caractérisé en ce que** ledit vase d'expansion (30) comporte au moins un cloison inclinée (32) dirigée vers ledit moyen de vidange (35) pour que ce moyen de vidange (35) soit au point bas du vase d'expansion (30).

4. Système selon l'une quelconque des revendications 1 à 3,
**caractérisé en ce que** ledit réservoir (15) s'étend en élévation d'une paroi inférieure (16) vers une paroi supérieure (17) à l'aplomb de laquelle ladite durite (50) débouche dans ladite canalisation (40), ledit vase d'expansion (30) étant solidarisé à ladite paroi supérieure (17).

5. Système selon l'une quelconque des revendications 1 à 4,
**caractérisé en ce qu'**il est dépourvu de pompe pour transférer du carburant du vase d'expansion vers le réservoir.

6. Système selon l'une quelconque des revendications 1 à 5,
**caractérisé en ce que** ledit vase d'expansion est dépourvu de moyen de liaison avec le réservoir pour ne pas participer à la mise à l'air libre dudit réservoir.

7. Système selon l'une quelconque des revendications 1 à 6,
**caractérisé en ce que** ladite durite (50) est à l'extérieur dudit réservoir (15).

8. Véhicule (1),
**caractérisé en ce qu'**il comporte un système de stockage (10) selon l'une quelconque des revendications 1 à 7.

9. Véhicule (1) selon la revendication 8,
**caractérisé en ce qu'**il comporte une voilure tournante.

## Patentansprüche

1. System (10) zur Kraftstoffspeicherung eines Fahrzeugs (1) mit mindestens einem Tank (15), der mit einem Einfüllstutzen (20) verbunden ist, der in einer Füllöffnung (21) mündet, wobei das System (10) einen Ausgleichsbehälter (30) und mindestens ein Belüftungsrohrnetz (40) aufweist, das den Tank (15) mit einer Atmosphäre (EXT) außerhalb des Fahrzeugs (1) verbindet,
**dadurch gekennzeichnet, dass** der Ausgleichsbehälter (30) im Inneren des Tanks (15) angeordnet ist, der Ausgleichsbehälter (30) parallel zu dem Rohrnetz angeordnet ist, indem er mit dem Rohrnetz (40) durch einen einzigen Schlauch (50) verbunden ist, wobei dieser Schlauch (50) oberhalb einer Füllebene, die durch die Füllöffnung (21) verläuft, in dem Rohrnetz (40) mündet, wobei der Ausgleichsbehälter (30) ein Mittel (35) zum Entleeren von Kraftstoff durch die Einwirkung der Schwerkraft aufweist, um ausschließlich den Fluss von Kraftstoff aus dem Ausgleichsbehälter (30) in das Innere (INT) des Tanks (15) durch die Einwirkung der Schwerkraft zu erlauben.

2. System nach Anspruch 1,
**dadurch gekennzeichnet, dass** das Mittel zum Entleeren (35) einen Verschluss (36) gegenüber einer Entleerungsöffnung (33) des Ausgleichsbehälters (30) aufweist, wobei der Verschluss (36) die Aufgabe hat, die Entleerungsöffnung (33) zu verschließen, wenn er in Kontakt mit Kraftstoff ist, der in dem Tank (15) enthalten ist.

3. System nach einem der Ansprüche 1 bis 2,
**dadurch gekennzeichnet, dass** der Ausgleichsbehälter (30) mindestens eine geneigte Wandung (32) aufweist, die auf das Mittel (35) zur Entleerung gerichtet ist, damit sich das Mittel (35) zur Entleerung auf dem unteren Punkt des Ausgleichsbehälters (30) befindet.

4. System nach einem der Ansprüche 1 bis 3,
**dadurch gekennzeichnet, dass** der Tank (15) sich in Seitenansicht gesehen von einer unteren Wandung (16) bis zu einer oberen Wandung (17) erstreckt, über der der Schlauch (50) in dem Rohrnetz (40) mündet, wobei der Ausgleichsbehälter (30) mit der oberen Wandung (17) fest verbunden ist.

5. System nach einem der Ansprüche 1 bis 4,
**dadurch gekennzeichnet, dass** es keine Pumpe zum Überführen von in dem Ausgleichsbehälter befindlichem Kraftstoff in den Tank aufweist.

6. System nach einem der Ansprüche 1 bis 5,
**dadurch gekennzeichnet, dass** der Ausgleichsbehälter keine Mittel zur Verbindung mit dem Tank aufweist, um nicht an der Belüftung des Tanks teilzuhaben.

7. System nach einem der Ansprüche 1 bis 6,
**dadurch gekennzeichnet, dass** der Schlauch (50) sich außerhalb des Tanks (15) befindet.

8. Fahrzeug (1),
**dadurch gekennzeichnet, dass** es ein System (10) zur Speicherung nach einem der Ansprüche 1 bis 7 aufweist.

9. Fahrzeug (1) nach Anspruch 8,
**dadurch gekennzeichnet, dass** es einen Drehflügel aufweist.

## Claims

1. Fuel storage system (10) of a vehicle (1) provided with at least one tank (15) connected to a filling pipe (20) opening into a filling orifice (21), said system (10) comprising an expansion vessel (30) and at least one vent conduit (40) connecting said tank (15) to an environment (EXT) outside said vehicle (1),
**characterised in that** said expansion vessel (30) is arranged inside the tank (15), the expansion vessel (30) being arranged in parallel with said conduit while being connected to said conduit (40) by a single hose (50), said hose (50) opening into said conduit (40) vertically in line with a filling plane passing through said filling orifice (21), said expansion vessel (30) comprising a draining means (35) for draining the fuel by gravity to allow only the passage by gravity of a fuel from the expansion vessel (30) towards the interior (INT) of the tank (15).

2. System according to Claim 1,
**characterised in that** said draining means (35) comprises an obturator (36) opposite a draining orifice (33) of said expansion vessel (30), said obturator (36) having the function of obturating said draining orifice (33) when it is in contact with the fuel contained in the tank (15).

3. System according to any one of Claims 1 to 2, **characterised in that** said expansion vessel (30) comprises at least one inclined partition (32) directed towards said draining means (35) so that said draining means (35) is at the lowest point of the expansion vessel (30).

4. System according to any one of Claims 1 to 3, **characterised in that** said tank (15) extends in elevation from a bottom wall (16) towards a top wall (17), vertically in line with which said hose (50) opens into said conduit (40), said expansion vessel (30) being secured to said top wall (17).

5. System according to any one of Claims 1 to 4, **characterised in that** it has no pump for transferring the fuel from the expansion vessel towards the reservoir.

6. System according to any one of Claims 1 to 5, **characterised in that** said expansion vessel has no means for connection to the tank so as not to take part in the venting of said tank.

7. System according to any one of Claims 1 to 6, **characterised in that** said hose (50) is outside said tank (15).

8. Vehicle (1),
**characterised in that** it comprises a storage system (10) according to any one of Claims 1 to 7.

9. Vehicle (1) according to Claim 8,
**characterised in that** it comprises a rotary wing.
